# EUROPÄISCHE PATENTSCHRIFT

(11) **EP 2 716 931 B1**
(45) Veröffentlichungstag und Bekanntmachung des Hinweises auf die Patenterteilung: **08.03.2017**
(21) Anmeldenummer: 13004757.4
(22) Anmeldetag: 02.10.2013
(51) Int. Cl.: F16D 65/12

(54) **Hybridbremsscheibe**
Hybrid brake disc
Disque de frein hybride

(30) Priorität: 03.10.2012 EP 12187059
(43) Veröffentlichungstag der Anmeldung: 09.04.2014
(73) Patentinhaber: Georg Fischer Automotive AG, 8201 Schaffhausen (CH); Buderus Guss GmbH, 35236 Breidenbach (DE)
(72) Erfinder: Weid, Dirk, 8200 Schaffhausen (CH)
(74) Vertreter: Fenner, Seraina

(56) Entgegenhaltungen:
- EP-A2- 2 275 702
- DE-A1-102008 061 915
- US-A- 5 823 303

## Beschreibung

Die Erfindung betrifft eine Bremsscheibe für eine Scheibenbremse eines Fahrzeugs insbesondere eines Kraftfahrzeugs beinhaltend eine Rotationsachse, einen Topf vorzugsweise aus einer Aluminiumlegierung oder einem Kunststoff, wobei der Topf radial angeordnete Vertiefungen aufweist und eine Reibscheibe vorzugsweise aus einer Gusseisenlegierung, wobei am Innenumfang der Reibscheibe Zapfen angeordnet sind um die Reibscheibe mit dem Topf zu verbinden, wobei die Zapfen jeweils eine Mittelachse aufweisen.

Im heutigen Fahrzeugbau ist ein wesentlicher Punkt die Gewichteinsparung, weshalb es bereits Stand der Technik ist, dass eine Bremsscheibe mehrere Materialien beinhaltet. In der Regel ist die Reibscheibe aus Gusseisen hergestellt, weiches die Wärme gut ableitet und thermisch beständig ist, insbesondere gegenüber Spannungen oder Rissbildungen.
Um die Masse der Bremsscheibe möglichst gering zu halten, empfiehlt es sich, den Topf der Bremsscheibe aus einer leichten Legierung vorzugsweise einer Aluminiumlegierung herzustellen.
Vorteilhaft ist es, wenn die Reibscheibe und der Topf miteinander vergossen werden. Aus dem Stand der Technik sind unterschiedliche Verbindungsarten der Reibscheibe mit dem Topf bekannt. Wichtig bei solchen Verbindungen ist die Gewährleistung einer guten Übertragung des Bremsmoments zwischen der Reibscheibe und dem Topf. Ebenso wichtig ist es die thermischen Probleme in der sich im Betrieb befindenden Bremsscheibe, welche sich durch das Bremsen und somit durch die Erwärmung der Bremsscheibe ergeben, zu beherrschen. Diese Schwierigkeiten sind einerseits auf die unterschiedlichen Materialien zurückzuführen wie auch andererseits auf die Erwärmung der Reibscheibe, die stärker ist als die des Topfes. Das kann dazu führen, dass sich die Reibscheibe in unerwünschter Weise schirmartig verformt, was einen ungleichmässigen Verschleiss der Bremsfläche und der Bremsbeläge mit sich bringt.

Die EP 1 972 823 B1 offenbart eine derartige Bremsscheibe, die ein topfartiges Tragteil beinhaltet sowie eine Reibscheibe, die sich radial erstreckende Verbindungsstege aufweist, welche die Verbindung mit dem Tragteil gewährleisten indem die radialen Enden der Verbindungsstege formschlüssig vom Tragteil umgeben sind, wobei die Verbindungsstege durch die Seitenwand des Tragteils hindurchtreten.
Nachteilig an dieser Ausführungsform ist die konische Verbindung der Verbindungsstege im Tragteil. Durch die Erwärmung der Bremsscheibe bewegen sich die Stege radial nach aussen, wodurch die konische Aufnahme zwischen Tragteil und Steg ein grösseres Spiel erhält, wodurch die Stege nicht mehr optimal geführt sind.
Die EP 2 275 702 A2 offenbart eine Bremsscheibe, die eine Trägerglocke beinhaltet, welche eine Vielzahl von radialen Aufnahmen aufweist, in die die Vorsprünge der Verbindungselemente der Bremsfläche greifen um die Trägerglocke mit der Bremsfläche zu verbinden. Die Verbindungselemente, welche in radialen Aufnahmen der Trägerglocke greifen, sind von den Wänden der Aufnahme derart umgeben, dass die Verbindungselemente axial und tangential fixiert und in radialer Richtung translatorisch frei sind.

Es ist Aufgabe der Erfindung eine Bremsscheibe vorzuschlagen, bei welcher eine Deformation der Reibscheibe verhindert wird insbesondere eine schirmartige Deformation ohne, dass sich ein Spiel zwischen den Verbindungselementen und dem Topf einstellt.

Diese Aufgabe wird erfindungsgemäss dadurch gelöst, dass die Zapfen bzw. ihre Mittelachsen in einem Winkel geneigt zur Normale auf die Rotationsachse verlaufen.

Die Zapfen sind derart an der Reibscheibe angeordnet, dass sich die Zapfen radial, durch ihre Neigung zur Normale nicht bewegen können. Vorzugsweise ist die Reibscheibe inklusiv Zapfen einteilig ausgebildet und durch ein Giessverfahren hergestellt. Die Normale verläuft rechtwinklig auf die Rotationsachse z der Bremsscheibe, wobei bei der vorliegenden Erfindung jede der Normalen rechtwinklig auf die Rotationsachse z der Bremsscheibe steht. Die Zapfen sind derart ausgerichtet, dass ihre Mittelachsen in einem Winkel geneigt zur Normale verlaufen und somit die Mittelachsen der Zapfen nicht parallel bzw. kongruent zur Normale stehen. Die Zapfen bzw. ihre Mittelachsen sind in einem Winkel zur Normale auf die Rotationsachse z angeordnet, wobei die Zapfen richtungsalternierend gegenüber der Normale angeordnet sind. Das heisst, ausgehend vom Verlauf einer Normale, neigt sich der eine Zapfen in die eine Richtung gegenüber der Normale und der Folgezapfen in die andere Richtung gegenüber der Normale. Dadurch wechselt sich entlang des Innenumfangs der Bremsscheibe die Ausrichtung der Zapfen ab, bzw. so dass jeweils ein Zapfenpaar gebildet wird das sich bei der Ausrichtung ergänzt bzw. gegengleich ausgerichtet ist. Das bedingt demzufolge auch eine gerade Anzahl von Zapfen die an der Reibscheibe angeordnet sind. Durch diese paarweise gegengleiche Ausrichtung der Zapfen wird das Ausdehnen der Reibscheibe während der Erwärmung ausschliesslich im elastischen Bereich der Werkstoffe ermöglicht, jedoch ohne dass sich die Zapfen radial translatorisch relativ zum Topf verschieben, da sie sich gegenseitig hemmen bzw. blockieren.

Eine bevorzugte Ausführungsform besteht darin, dass die Zapfen eine zylindrische Form aufweisen, was eine einfache Verbindungsmöglichkeit mit dem Topf bzw. mit den Vertiefungen gewährleistet. Die Zapfen, welche am Innenumfang der Reibscheibe angeordnet sind, vorzugsweise daran angegossen sind, ragen in die Vertiefungen des Topfes, so dass eine tangentiale und axiale formschlüssige Verbindung gebildet wird. Durch die Ausrichtung der Zapfen, die paarweise gegengleich ist, wird ein herauswandern der Zapfen aus den Vertiefungen im Topf unterdrückt.

Eine alternative Ausführungsform besteht darin, die Zapfen konisch auszuformen. Vorzugsweise ist die Verjüngung des Zapfens Richtung Topf gerichtet. Um sicheren Formschluss bei der Ausdehnung des Reibrings zu gewährleisten, muss bei der Konstruktion der Neigungswinkel der Mittelachse des Zapfens gegenüber der Normale grösser als der halbe Kegelwinkel des Zapfens gewählt werden.

Eine vorteilhafte Ausgestaltung der Erfindung liegt darin, dass die Zapfen bzw. ihre Mittellinien zur Normale auf die Rotationsachse z, in der Ebene x-z, in der auch die Rotationsachse z verläuft, in einem Winkel geneigt sind. Das heisst, dass sich die Zapfen abwechslungsweise auf die eine Seite der Normale in der Ebene x-z neigen und der Folgezapfen entsprechend auf die andere Seite der Normale in der Ebene x-z, hierbei wird immer von einem aus dem Stand der Technik bekannten Koordinatensystem ausgegangen, welches standardmässig in der Technik eingesetzt wird. Wichtig dabei ist, dass der Neigungswinkel der Mittelachsen auf beiden Seiten gleich gross ist.
Vorzugsweise liegt der Winkel zwischen der Mittelachse des Zapfens und der Normale im Bereich von 0.5°-10°. Berechnungen haben gezeigt, dass Ausführungsformen von Bremsscheiben, bei welchen die Winkel im Bereich zwischen 0.5°-3° liegen zu bevorzugen sind.
Der Drehpunkt der Mittelachse liegt vorzugsweise auf der Höhe des Innenradius/Innenumfangs der Reibscheibe wo auch die Ausformung der Zapfen beginnt, dadurch kann der Zapfen in die richtige Richtung ausgerichtet werden.

Als mögliche Variante können die Zapfen bzw. ihre Mittellinien zur Normale auf die Rotationsachse in der Ebene x-y, welche rechtwinklig zur Rotationsachse z verläuft, in einem Winkel geneigt sein. Das heisst, dass die Mittelachsen sich in Umfangsrichtung der Bremsscheibe neigen. Vorzugsweise liegt auch hier der Drehpunkt der Zapfen auf der Höhe des Innenumfangs der Reibscheibe. Ebenfalls wird auch bei dieser Ausführungsform die Richtung des Winkels auf den sich die Mittelachse gegenüber der Normale neigt abgewechselt.

Selbstverständlich besteht die Möglichkeit der Kombination der beiden zuvor erwähnten Neigungsvarianten. Wichtig ist, dass die Zapfen bzw. die Ausrichtung ihrer Mittelachsen sich paarweise wieder aufheben bzw. gegengleich gerichtet sind. Somit kann ein Zapfen bzw. die Mittelachse sich sowohl in der Ebene x-z neigen, wie auch in der Ebene x-y. Der Folgezapfen muss entsprechend die gegengleiche Ausrichtung in Bezug auf die entsprechende Normale aufweisen.
In einer bevorzugten Ausführungsform weist die Bremsscheibe zwischen sechs und 30 Zapfen auf, wobei sich gezeigt hat, dass die Bremsscheiben mit einer Zapfenanzahl zwischen acht und 20 besonders zu bevorzugen ist. Die Bremsscheibe bzw. der Topf weist entsprechend viele Vertiefungen auf.

Ausführungsbeispiele der Erfindung werden anhand der Figuren beschrieben, wobei sich die Erfindung nicht nur auf die Ausführungsbeispiele beschränkt. Es zeigen:
Fig. 1 eine dreidimensionale Ansicht einer erfindungsgemässen Bremsscheibe mit in der Ebene x-y, geneigten Zapfen,
Fig. 2 eine Seitenansicht einer erfindungsgemässen Bremsscheibe mit in der Ebene x-z geneigten Zapfen,
Fig. 3 eine Frontansicht einer erfindungsgemässen Bremsscheibe mit geneigten Zapfen in der Ebene x-y und
Fig. 4 eine Frontansicht einer erfindungsgemässen Bremsscheibe, mit geneigten konischen Zapfen in der Eben x-y.

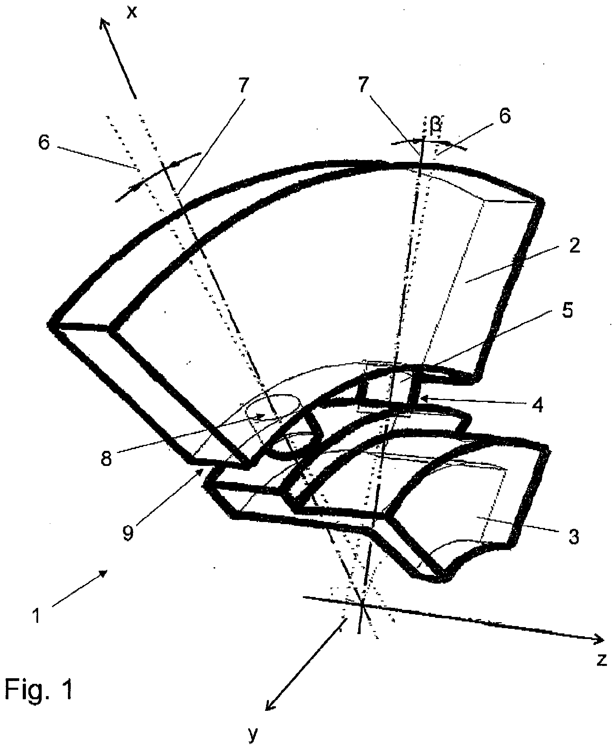

Fig. 1 zeigt eine erfindungsgemässe Bremsscheibe 1. Der Topf 3 Ist vorzugsweise aus einem leichten Material hergestellt, wie Aluminium oder Kunststoff. Der Topf 3 weist Vertiefungen 4 auf in denen die Zapfen 5 angeordnet sind um den Topf 3 und die Reibscheibe 2 miteinander zu verbinden. Vorzugsweise sind die Vertiefungen 4 nicht durchgehend. Die Zapfen 5, welche am Innenumfang 9 der Reibscheibe 2 angeordnet sind, sind vorzugsweise direkt an der Reibscheibe 2 angegossen wodurch die Reibscheibe 2 einteilig ausgebildet ist. Durch die Anordnung der Zapfen 5 in den Vertiefungen wird ein axialer und tangetialer Formschluss erzielt. Durch die Neigung der Zapfen 5 bzw. ihrer Mittelachse 6 in einem Winkel β zur Normale 7 in der Ebene x-y und durch ihre gegengleiche Ausrichtung, wird der Reibscheibe 2 die relative Verschiebung in radialer Richtung verunmöglicht, wobei eine Verformung der Zapfen 5, während der Erwärmung der Bremsscheibe 1, im elastischen Bereich stattfindet. Der Winkel β in dem die Zapfen 5 bzw. Mittelachsen 6 geneigt sind, muss bei allen Zapfen 5 gleich gross sein. Die Zapfen 5 bzw. ihre Mittellinien 6 müssen jedoch alternierend die Richtung des Winkels β in Bezug auf die Normale 7 in der Ebene x-y wechseln, wodurch die Zapfen 5 paarweise gegengleich ausgerichtet sind. Es ist demzufolge wichtig, dass die Bremsscheibe 1 eine gerade Anzahl von Zapfen 5 aufweist, vorzugsweise liegt die Anzahl der Zapfen 5 zwischen sechs und 30 Stück pro Bremsscheibe 1.

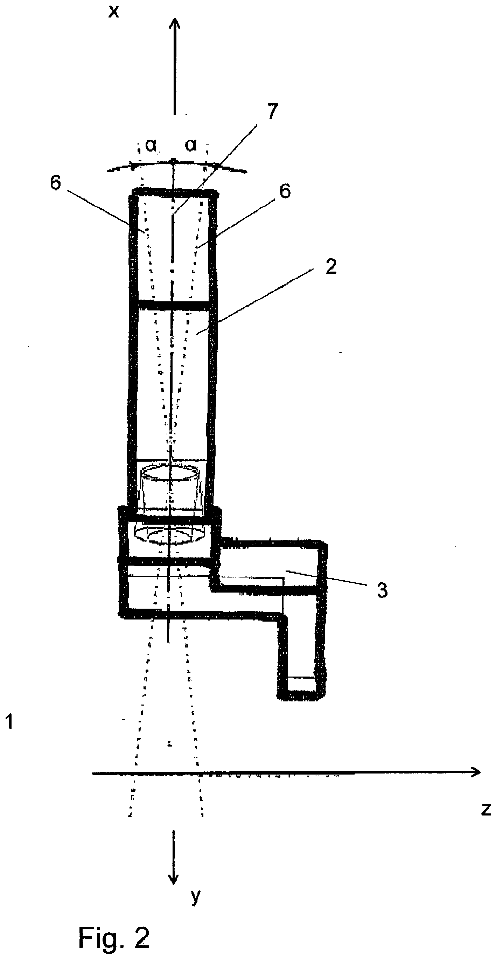

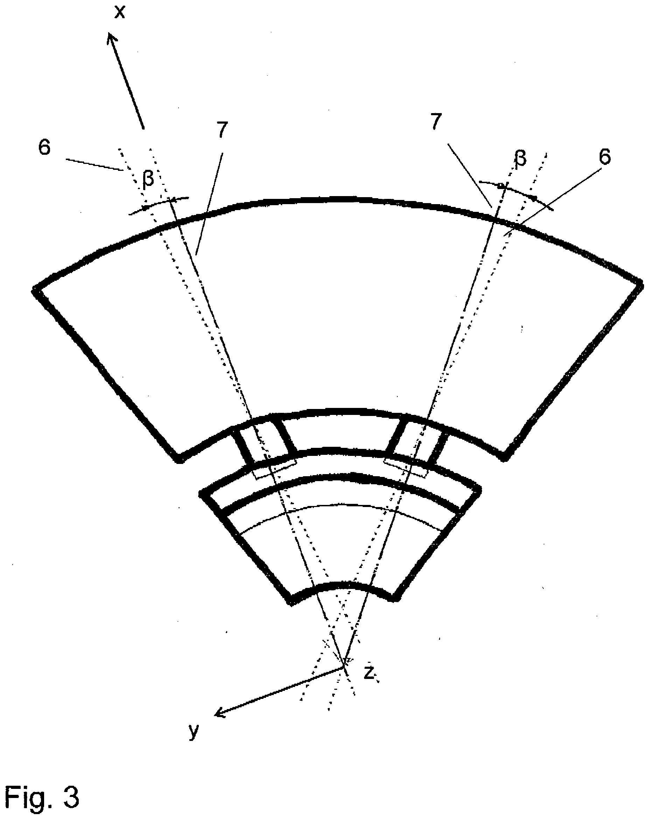

Fig. 2 zeigt eine Bremsscheibe 1 bei der die Zapfen 5 in der Ebene x-z geneigt sind. Hieraus wird deutlicher ersichtlich, dass die Zapfen 5 bzw. ihre Mittellinien 6 in einem Winkel α zur Normale 7 geneigt sind und dass sich die Neigung der Zapfen 5 in Bezug auf die Ausrichtung gegenüber der Normale 7 in der Ebene x-z abwechseln. Der Drehpunkt 8 der Mittelachse 6 liegt vorzugsweise auf dem Innenumfang 9 der Reibscheibe 2, was auch aus Fig. 1 erkennbar ist. Fig. 3 zeigt die Frontalansicht der Bremsscheibe 1, wobei in dieser Ausführungsform die Zapfen 5 bzw. die Mittellinien 6 In der Ebene x-y geneigt sind. Das heisst bei dieser Ausführung, dass die Zapfen 5 bzw. ihre Mittelinien 6 in einem Winkel β zur Normale 7 geneigt sind und dass auch hier wieder die Zapfen 5 paarweise alternierend in Bezug auf die Normale 7 in der Ebene x-y geneigt sind, wie das aus Fig. 3 gut erkennbar ist. Der Drehpunkt 8 des Neigungswinkels β liegt auch in dieser Ausführungsform vorzugsweise auf dem Innenumfang 9.

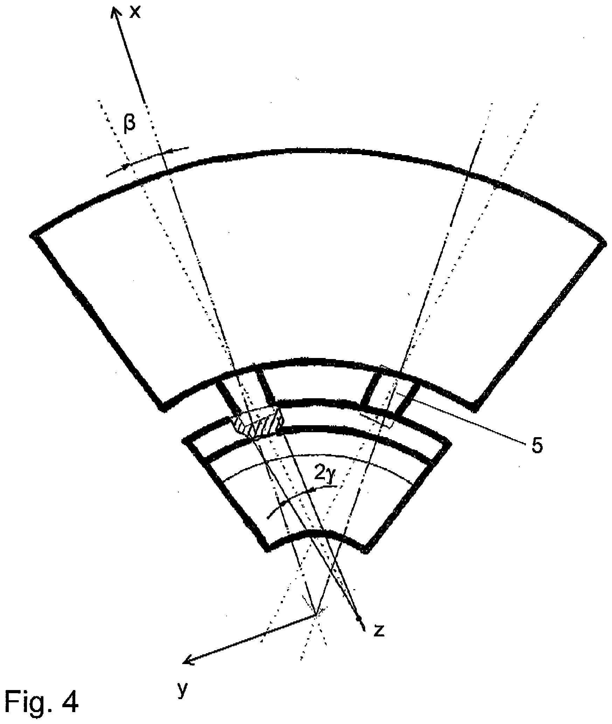

Als weitere Ausführungsform besteht die Möglichkeit die Zapfen 5 konisch vorzusehen, wie in Fig. 4 ersichtlich ist. Um einen sicheren Formschluss bei der Ausdehnung der Reibscheibe zu gewährleisten, muss der Winkel (α, β) grösser als der Winkel γ des Kegels sein.

In den vorhergehenden Ausführungsbeispielen ist der Zapfen 5 zylindrisch ausgebildet auch weitere Formen sind denkbar.

Natürlich ist auch die Ausrichtung der Zapfen 5 kombinierbar, das heisst, dass die Zapfen 5 nicht nur wie in Fig. 1, 3 und 4 in der Ebene x-y geneigt sein können sondern auch zusätzlich in der Eben x-z wie in den Fig. 2. Wichtig ist, dass die Zapfen 5 sich paarweise ergänzen bzw. aufheben und somit gegengleich gerichtet sind.

### Bezugszeichenliste

- 1: Bremsscheibe
- 2: Reibscheibe
- 3: Topf
- 4: Vertiefung
- 5: Zapfen
- 6: Mittelachsen der Zapfen
- 7: Normale auf Rotationsachse z
- 8: Drehpunkt
- 9: Innenumfang / Innenradius

- α: Neigungswinkel der Mittelachse des Zapfens zur Normale der Rotationsachse (x) in Richtung Rotationsachse (x)
- β: Neigungswinkel der Mittelachse des Zapfens zur Normale der Rotationsachse (x) radial geneigt
- 2γ: Kegelwinkel

- x: Achse
- y: Achse
- z: Rotationsachse der Bremsscheibe

## Patentansprüche

1. Bremsscheibe (1) für eine Scheibenbremse eines Fahrzeugs insbesondere eines Kraftfahrzeugs beinhaltend eine Rotationsachse (z), einen Topf (3) vorzugsweise aus einer Aluminiumlegierung oder einem Kunststoff, wobei der Topf (3) radial angeordnete Vertiefungen (4) aufweist und eine Reibscheibe (2) vorzugsweise aus einer Gusseisenlegierung, wobei am Innenumfang (9) der Reibscheibe (2) Zapfen (5) angeordnet sind um die Reibscheibe (2) mit dem Topf (3) zu verbinden, wobei die Zapfen (5) jeweils eine Mittelachse (6) aufweisen, **dadurch gekennzeichnet, dass** die Zapfen (5) bzw. ihre Mittelachsen (6) in einem Winkel (α, β) geneigt zur Normale (7) auf die Rotationsachse (z) verlaufen.

2. Bremsscheibe (1) nach Anspruch 1, **dadurch gekennzeichnet, dass** die Zapfen (5) bzw. ihre Mittelachsen (7) richtungsalternierend in einem Winkel (α, β) geneigt zur Normale (7) auf die Rotationsachse (z) ausgerichtet sind.

3. Bremsscheibe (1) nach einem der Ansprüche 1 oder 2, **dadurch gekennzeichnet, dass** eine gerade Anzahl Zapfen (5) an der Reibscheibe (2) angeordnet sind.

4. Bremsscheibe (1) nach einem der Ansprüche 1 bis 3, **dadurch gekennzeichnet, dass** die Zapfen (5) eine zylindrische Form aufweisen.

5. Bremsscheibe (1) nach einem der Ansprüche 1 bis 4, **dadurch gekennzeichnet, dass** die Zapfen (5) eine konische Form aufweisen.

6. Bremsscheibe (1) nach einem der Ansprüche 1 bis 5, **dadurch gekennzeichnet, dass** die Zapfen (5) bzw. ihre Mittelachsen (6) zur Normale (7) auf die Rotationsachse (z) in der Ebene x-z in einem Winkel (α) geneigt sind.

7. Bremsscheibe (1) nach einem der Ansprüche 1 bis 5, **dadurch gekennzeichnet, dass** die Zapfen (5) bzw. ihre Mittelachsen (6) zur Normale (7) auf die Rotationsachse (x) in der Ebene x-y in einem Winkel (β) geneigt sind.

8. Bremsscheibe (1) nach einem der vorhergehenden Ansprüche, **dadurch gekennzeichnet, dass** sich der Drehpunkt (8) um den die Mittelachse (6) der Zapfen geneigt ist auf dem Innenumfang (9) liegt.

9. Bremsscheibe (1) nach einem der vorhergehenden Ansprüche, **dadurch gekennzeichnet, dass** der Winkel (α, β) im Bereich von 0.5° - 10° liegt, vorzugsweise im Bereich von 1° - 3°.

10. Bremsscheibe (1) nach einem der vorhergehenden Ansprüche, **dadurch gekennzeichnet, dass** die Bremsscheibe (1) zwischen sechs und 30 Zapfen 5 aufweist.

## Claims

1. Brake disc (1) for a disc brake of a vehicle, in particular of a motor vehicle, comprising an axis of rotation (z), a pot (3) preferably composed of an aluminium alloy or a plastic, wherein the pot (3) has radially arranged depressions (4), and a friction disc (2) preferably composed of a cast iron alloy, wherein, on the inner circumference (9) of the friction disc (2), there are arranged studs (5) for connecting the friction disc (2) to the pot (3), wherein the studs (5) each have a central axis (6), **characterized in that** the studs (5) or the central axes (6) thereof run so as to be inclined at an angle (α, β) with respect to the normal (7) to the axis of rotation (z).

2. Brake disc (1) according to Claim 1, **characterized in that** the studs (5) or the central axes (7) thereof are oriented so as to be inclined at an angle (α, β), in alternating directions, with respect to the normal (7) to the axis of rotation (z).

3. Brake disc (1) according to either of Claims 1 and 2, **characterized in that** an even number of studs (5) is arranged on the friction disc (2).

4. Brake disc (1) according to one of Claims 1 to 3, **characterized in that** the studs (5) have a cylindrical shape.

5. Brake disc (1) according to one of Claims 1 to 4, **characterized in that** the studs (5) have a conical shape.

6. Brake disc (1) according to one of Claims 1 to 5, **characterized in that** the studs (5) or the central axes (6) thereof are inclined at an angle (α) with respect to the normal (7) to the axis of rotation (z) in the x-z plane.

7. Brake disc (1) according to one of Claims 1 to 5, **characterized in that** the studs (5) or the central axes (6) thereof are inclined at an angle (β) with respect to the normal (7) to the axis of rotation (x) in the x-y plane.

8. Brake disc (1) according to one of the preceding claims, **characterized in that** the centre of rotation (8) about which the central axis (6) of the studs is inclined lies on the inner circumference (9).

9. Brake disc (1) according to one of the preceding claims, **characterized in that** the angles (α, β) lie in the range from 0.5° - 10°, preferably in the range from 1° - 3°.

10. Brake disc (1) according to one of the preceding claims, **characterized in that** the brake disc (1) has between six and 30 studs (5).

## Revendications

1. Disque de frein (1) pour un frein à disque d'un véhicule, en particulier d'un véhicule automobile, contenant un axe de rotation (z), un pot (3), de préférence en alliage d'aluminium ou en plastique, le pot (3) présentant des renfoncements (4) disposés radialement, et un disque de friction (2), de préférence en alliage de fonte, des tourillons (5) étant disposés à la périphérie intérieure (9) du disque de friction (2), afin de connecter le disque de friction (2) au pot (3), les tourillons (5) présentant à chaque fois un axe médian (6), **caractérisé en ce que** les tourillons (5) ou leurs axes médians (6) s'étendent suivant un angle (α, β) incliné par rapport à la normale (7) à l'axe de rotation (z).

2. Disque de frein (1) selon la revendication 1, **caractérisé en ce que** les tourillons (5) ou leurs axes médians (7) sont orientés avec des directions alternées suivant un angle (α, β) incliné par rapport à la normale (7) à l'axe de rotation (z).

3. Disque de frein (1) selon l'une quelconque des revendications 1 ou 2, **caractérisé en ce qu'**un nombre pair de tourillons (5) sont disposés sur le disque de friction (2).

4. Disque de frein (1) selon l'une quelconque des revendications 1 à 3, **caractérisé en ce que** les tourillons (5) présentent une forme cylindrique.

5. Disque de frein (1) selon l'une quelconque des revendications 1 à 4, **caractérisé en ce que** les tourillons (5) présentent une forme conique.

6. Disque de frein (1) selon l'une quelconque des revendications 1 à 5, **caractérisé en ce que** les tourillons (5) ou leurs axes médians (6) sont inclinés suivant un angle (α) par rapport à la normale (7) à l'axe de rotation (z) dans le plan x-z.

7. Disque de frein (1) selon l'une quelconque des revendications 1 à 5, **caractérisé en ce que** les tourillons (5) ou leurs axes médians (6) sont inclinés suivant un angle (β) par rapport à la normale (7) à l'axe de rotation (x) dans le plan x-y.

8. Disque de frein (1) selon l'une quelconque des revendications précédentes, **caractérisé en ce que** le centre de rotation (8) autour duquel l'axe médian (6) des tourillons est incliné est situé sur la périphérie interne (9).

9. Disque de frein (1) selon l'une quelconque des revendications précédentes, **caractérisé en ce que** l'angle (α, β) est compris dans une plage de 0,5° à 10°, de préférence dans une plage de 1° à 3°.

10. Disque de frein (1) selon l'une quelconque des revendications précédentes, **caractérisé en ce que** le disque de frein (1) présente entre six et 30 tourillons (5).
